# EUROPÄISCHE PATENTSCHRIFT

(11) **EP 1 185 438 B1**
(45) Veröffentlichungstag und Bekanntmachung des Hinweises auf die Patenterteilung: **10.12.2003**
(21) Anmeldenummer: 00938535.2
(22) Anmeldetag: 10.05.2000
(51) Int. Cl.: B60R 11/00, G01S 7/03

(54) **HALTERUNG FÜR EIN JUSTIERBARES GEHÄUSE**
MOUNTING FOR AN ADJUSTABLE HOUSING
FIXATION POUR UN BOITIER AJUSTABLE

(30) Priorität: 26.05.1999 DE 19924055
(43) Veröffentlichungstag der Anmeldung: 13.03.2002
(73) Patentinhaber: ROBERT BOSCH GMBH, 70442 Stuttgart (DE)
(72) Erfinder: LUCAS, Bernhard, D-74354 Besigheim (DE); LANGENHAN, Dirk, D-71701 Schwieberdingen (DE)
(86) Internationale Anmeldenummer: DE0001464
(87) Internationale Veröffentlichungsnummer: WO00073103

(56) Entgegenhaltungen:
- DE-C- 19 642 810
- DE-C- 19 739 298
- US-A- 5 313 213
- US-A- 5 875 685
- PATENT ABSTRACTS OF JAPAN vol. 017, no. 302 (P-1553), 10. Juni 1993 (1993-06-10) & JP 05 027037 A (KANSEI CORP), 5. Februar 1993 (1993-02-05)

## Beschreibung

### Stand der Technik

Die Erfindung betrifft eine Halterung für ein justierbares Gehäuse, insbesondere für einen Radarsensor, der außen an einem Kraftfahrzeug angebracht ist, nach dem Oberbegriff des Hauptanspruchs.

Es ist beispielsweise aus der DE 197 39 298 C1 eine gattungsgemässe Halterung bekannt, dass ein Radarsensor mit einer Halterung außen an einem Fahrzeug angeschraubt wird. Dieser Radarsensor kann beispielsweise ein Baustein eines Fahrzeugsicherheitssystems sein, bei dem ständig Informationen über den Abstand und/oder die Relativgeschwindigkeit des Fahrzeuges zu anderen Fahrzeugen und zu den Straßengegebenheiten verarbeitet werden. Es ist hierbei notwendig, den Radarsensor sehr genau auf die Fahrzeuglängsachse auszurichten, wodurch aufgrund der zum Teil erheblichen Fahrzeugtoleranzen im Bereich der Anbaustelle eine Justage des Sensors nach dem Einbau ins Kraftfahrzeug notwendig ist.

Bei der zuvor genannten bekannten Vorrichtung erfolgt der Justagevorgang des Radarsensors im Fahrzeug von vorn (in Fahrtrichtung) durch Drehen an relativ balligen Köpfen von Justierschrauben. Eine weitere Schraube stellt dabei das sogenannte Festlager dar.

### Vorteile der Erfindung

Eine Halterung der eingangs genannten Art, bei der die Lage eines Gehäuses mit mindestens einer Justierschraube veränderbar sein soll, ist in der erfindungsgemäßen Weiterbildung mit den kennzeichnenden Merkmalen des Anspruchs 1 dadurch vorteilhaft, dass eine wesentliche Vereinf achung der Montagefunktionen, insbesondere wenn z.B. der Zugang zu den Justierschrauben von vorn durch ev. vorgelagerte Fahrzeugteile, nicht möglich ist, dadurch erreicht wird, dass die mindestens eine Justierschraube an der Halterung mit einem Umlenkgetriebe versehen ist. Über das Umlenkgetriebe kann eine Drehspindel an der Grundplatte der Halterung von außen bedient werden, wobei die Justage über eine Drehung der Drehspindel zur Verdrehung der mindestens einen Justierschraube im Schraubgewinde bewirkt wird.

Insbesondere zur Befestigung des Gehäuses eines Radarsensors, bei dem eine Justage des Gehäuses zur Veränderung der Abstrahlrichtung des Radarsensors gefordert ist, kann das Umlenkgetriebe in vorteilhafter Weise eine Umlenkung der Drehbewegung der Drehspindel nahezu im rechten Winkel bewirken, so dass die Drehung der Drehspindel nahezu senkrecht zur Abstrahlrichtung erfolgt.

Aufgrund der engen Platzverhältnisse in einem Kraftfahrzeug oder einem in Fahrtrichtung versperrten Zugang von vorn ist es vorteilhaft, wenn gemäß der Erfindung die Justierung eines Radarsensors am fertig montierten Kraftfahrzeug mit Justierschrauben auch von unten, oben oder seitlich auf eine kostengünstige Weise durchführbar ist.

Bei einer bevorzugten Ausführungsform besteht das Umlenkgetriebe aus Kegelrädern, wobei es weiterhin vorteilhaft ist, wenn mindestens ein Kegelrad auf der Justierschraube beweglich ist und über eine geeignete konstruktive Lösung, wie z.B. eine Feder oder dergleichen, an das jeweils andere Kegelrad gedrückt wird. Bei dieser Anordnung ist eine größtmögliche Varianz der Justagerichtung, z.B. von oben, unten, links oder rechts und eine Änderung des Übersetzungsverhältnisses durch einfache Änderung der Kegelradanordnung erreichbar.

Das Schraubgewinde, über das die Bewegung des Gehäuses entlang der Längsachse der Justierschrauben erfolgt, befindet sich gemäß der Erfindung in vorteilhafter Weise in der Grundplatte der Halterung.

Bei einer anderen vorteilhaften Ausführungsform kann das Umlenkgetriebe aus einem Schneckenrad und einem Stirnrad bestehen. Hierbei besteht keine Gefahr der Hemmung oder Sperrung des Umlenkgetriebes durch eine ev. zu hohe Übersetzung und damit ist eine sehr feinfühlige Justagebewegung möglich. Diese Anordnung ist aufgrund ihrer Konstruktion auch relativ unempfindlich gegenüber Schmutzeinwirkungen.

Das Schraubgewinde ist aus einem beim Eindrehen der mindestens einen Justierschraube selbstfurchenden, spielfreien Gewinde, beispielsweise in einem Kunststoffeinsatz in der Grundplatte der Halterung, gebildet, wie es für sich gesehen aus dem eingangs erwähnten Stand der Technik bekannt ist. Das Gehäuse kann dabei auf einfache Weise mit drei Schrauben an der Halterung befestigt werden, wobei zwei diagonal gegenüberliegende Schrauben jeweils als Justierschraube ausgeführt sind.

Diese und weitere Merkmale von bevorzugten Weiterbildungen der Erfindung gehen außer aus den Ansprüchen, einschließlich der rückbezogenen Unteransprüche, auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Ein Ausführungsbeispiel einer erfindungsgemäßen Halterung für das Gehäuse eines Radarsensors an einem Kraftfahrzeug wird anhand der Zeichnung erläutert. Es zeigen:
Figur 1 eine Ansicht eines Radarsensors mit einer justierbaren Halterung nach dem Stand der Technik;
Figur 2 eine Ansicht einer Grundplatte der erfindungsgemäßen Halterung mit zwei Justierschrauben mit einem Umlenkgetriebe;
Figur 3 eine Detailzeichnung des Umlenkgetriebes nach der Figur 2.

### Beschreibung der Ausführungsbeisbiele

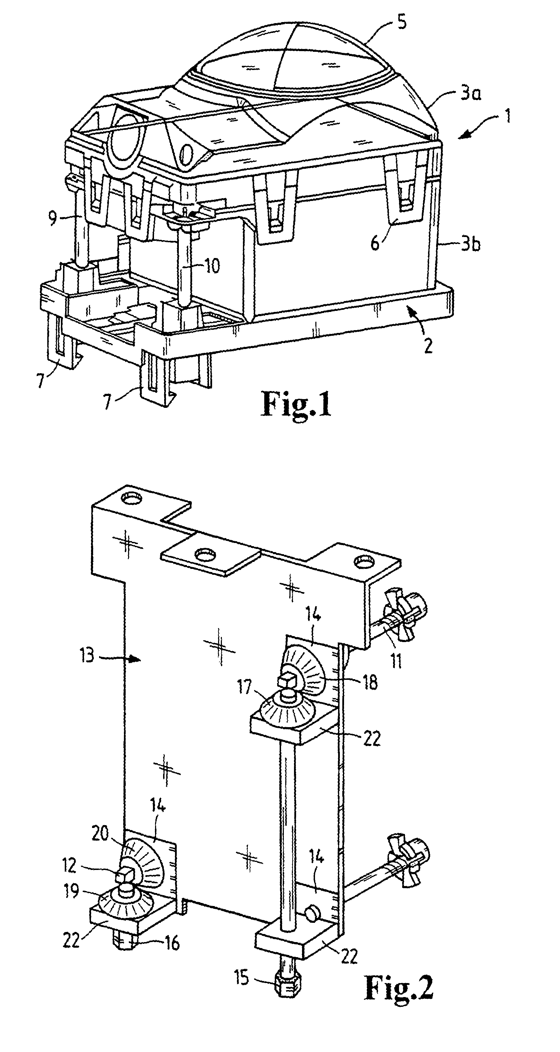

Aus Figur 1 ist in einer perspektivischen Darstellung ein als Radarsensor aufgebauter Entfernungssensor 1 ersichtlich, wie er aus dem eingangs erwähnten Stand der Technik DE 197 39 298 C1 bekannt ist. Der Entfernungssensor 1 ist zur Befestigung an einem Kraftfahrzeug über eine Halterung 2 in einem kompakten Gehäuse 3 untergebracht, welches hier aus einem unteren Gehäuseteil 3b und einem oberen Gehäuseteil 3a zusammengesetzt ist.

Die beiden Gehäuseteile 3a und 3b sind bei diesem bekannten Sensor 1 über Klippverbindungen 6 miteinander verbunden. Im oberen Gehäuseteil 3a ist eine Linse 5 zur Fokussierung der Radarstahlen des Entfernungssensors 1 angeordnet. Das Gehäuse 3 des Entfernungssensors 1 ist über Schrauben 9 und 10 an der Halterung 2 befestigt, wobei eine weitere Schraube an einer durch das Gehäuseteil 3b verdeckten Ecke des Sensors 1 angebracht ist. Die Halterung 2 besitzt Fang- oder Schnappelemente 7 mit denen sie in entsprechend ausgeformte Aufnehmungen an der Karosserie eines Kraftfahrzeugs einrasten kann, wobei hier auch eine Vielzahl anderer Befestigungsmöglichkeiten anwendbar ist.

Die Schrauben 9, 10 und 11 (vgl. Figur 2) greifen in Einschraubbereiche der Halterung 2 ein und sie besitzen einen kugelförmigen Schraubenkopf, der in einer entsprechend ausgeformte Aufnahme des Gehäuses 3 gelagert ist, wodurch das Gehäuse 3 gegenüber der Halterung 2 bewegbar und damit justierbar ist. Die Schrauben 9 und 10 sowie die nicht sichtbare Schraube bilden aufgrund ihrer L-förmigen Anordnung eine Dreipunktlagerung, wobei die Schraube 10 und die nicht sichtbare Schraube zwei Loslager für die horizontale und vertikale Justierung des Gehäuses 3 (Justierschrauben) und die Schraube 9 ein Festlager bildet.

Ein Ein- oder Ausschrauben beispielsweise der Justierschraube 10 in den zugehörigen Einschraubbereich bewirkt ein Kippen des Sensors 1 um eine Achse, die durch die Aufhängepunkte der Schraube 9 und der nicht sichtbaren Schraube 11 geht. Ein Ein- oder Ausschrauben beispielsweise der nicht sichtbaren Justierschraube 11 in den zugehörigen Einschraubbereich bewirkt ein Kippen des Sensors 1 um eine Achse, die durch die Aufhängepunkte der Schraube 9 und 10 geht.

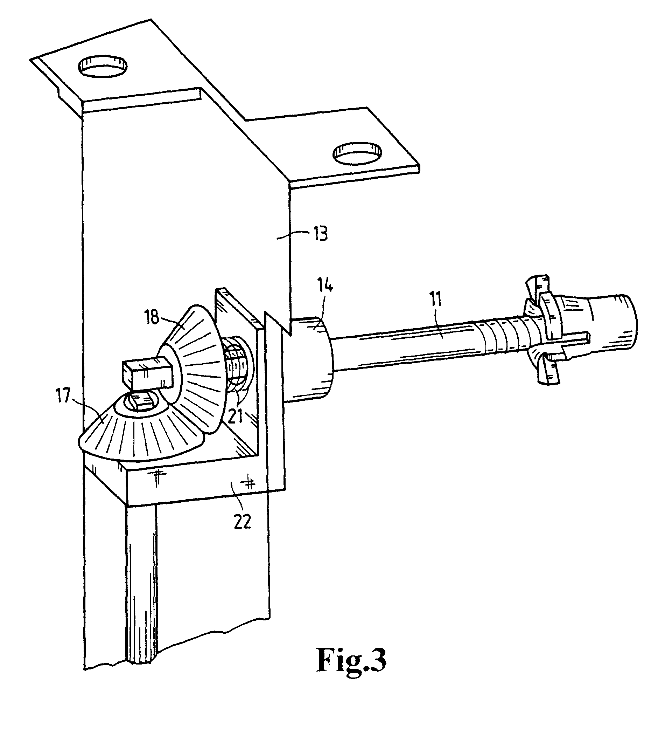

In Figur 2 ist ein erfindungsgemäßes Ausführungsbeispiel einer Anordnung von Justierschrauben 11 und 12 an einer Halterung 13 gezeigt, wobei hier auch auf die detaillierte Darstellung der Justierschraube 11 nach Figur 3 verwiesen wird. Mit dieser Ausführung der Justierschrauben 11 und 12 ist eine Justage eines Entfernungssensors möglich, der im wesentlichen dem aus der Figur 1 bekannten Sensor 1 entspricht. Die Justierschrauben 11 und 12 werden auch hier mit einem selbstfurchendem Gewinde in an der Halterung 13 befindliche Kunststoffeinsätze 14 eingedreht. Es ist hierbei lediglich vorzusehen, dass keine Drehbewegung mehr an den vorn liegenden Schraubenköpfen möglich ist, was beispielsweise durch eine Abdeckung am Sensorgehäuse erfolgen kann.

Die Justierschrauben 11 und 12 sind nach der Erfindung von unten justierbar jeweils über eine Drehspindel 15, 16 ausgeführt. Es erfolgt hier eine Umlenkung der Drehrichtung der Drehspindel 15 und 16 um 90° durch Kegelräder 17 und 18 an der Justierschraube 11 und durch Kegelräder 19 und 20 an der Justierschraube 12. Die Kegelräder 17 und 19 sind fest mit der jeweiligen Drehspindel 15 oder 16 verbunden, z.B. durch ein Aufschrumpfen oder wie aus der Figur 3 ersichtlich durch einen Kraftschluß über einen Vierkant oder anderer geeigneter Formen (z.B. ein Halbkreis).

Die Lagerung der Drehspindel 15 und 16 erfolgt hier direkt an der Halterung 13, wobei sich am Ende der Drehspindel 15 und 16 ein Schraubenkopf befindet, der anwendungsspezifisch abgestimmt werden kann, zum Beispiel in Form eines Sechskantes. Die Kegelräder 18 und 20 sind hier durch das vierkantige Ende der Justierschrauben 11 und 12 kraftschlüssig mit diesen verbunden. Die Kegelräder 18 und 20 sind parallel zur Achse der Justierschrauben 11 und 12 in bestimmten Grenzen beweglich. Das Andrücken der Kegelräder 18 und 20 an die Kegelräder 17 und 19 kann durch eine Feder 21 (vgl. Figur 3) oder durch eine geeignete Gestaltung des Kunststoffes erfolgen.

Wenn zum Beispiel an der Drehspindel 15 gedreht wird, so werden die Kegelräder 17 und 18 und auch die Justierschraube 11 mitgedreht. Durch die spielfreie, gewindefurchende Lagerung der Justierschraube 11 im Kunststoffeinsatz 14 der Halterung 13 wird die Justierschraube 11 in die Halterung 13 ein- und ausgedreht. Das Kegelrad 18 bewegt sich dabei längs zur Achse der Justierschraube 11. Die Einleitung der Schraubbewegung zur Justage des oben beschriebenen Radarsensors erfolgt somit nach der Erfindung um 90° versetzt zur Drehrichtung der Justierschrauben 11 und 12. In den Figuren ist die Möglichkeit einer Justage von unten dargestellt, wobei jedoch auch eine Justage von oben oder links bzw. rechts seitlich möglich ist. Es muss hierzu lediglich die Anordnung der Kegelräder zueinander geändert werden.

Bei einer hier nicht dargestellten Abwandlung des zuvor beschriebenen Umlenkgetriebes nach den Figuren 2 und 3 kann dieses aus einem Schneckenrad und einem Stirnrad bestehen, die eine vergleichbare Wirkungsweise wie die Kegelräder bei der Umsetzung der Drehrichtung besitzen.

## Patentansprüche

1. Halterung für ein justierbares Gehäuse, bei der die Lage des Gehäuses (3a, 3b) an der Halterung (2, 13) mit mindestens einer Justierschraube (10, 11, 12) veränderbar ist und die Justierschraube (10, 11, 12) über ein Schraubgewinde durch das Gehäuse (3a, 3b) oder am Gehäuse (3a, 3b) senkrecht zu einer Grundplatte der Halterung (2, 13) geführt ist, **dadurch gekennzeichnet, dass** die mindestens eine Justierschraube (11, 12) an der Halterung (13) mit einem Umlenkgetriebe versehen ist, über das eine Drehspindel (15, 16) an der Grundplatte an der Halterung (13) nach außen führbar ist, wobei die Justierung über eine Drehung der Drehspindel (15, 16) zur Verdrehung der mindestens einen Justierschraube (11, 12) im Schraubgewinde bewirkbar ist, wobei das Umlenkgetriebe aus Kegelradern (17, 18, 19, 20) besteht und mindestens ein Kegelrad (18, 20) auf der Justierschraube (11, 12) beweglich ist und über eine Feder (21) oder eine geeignete Form der Kegelradaufnahme an das jeweils andere Kegelrad druckbar ist.

2. Halterung nach Anspruch 1
- zur Befestigung des Gehäuses (3a,3b) eines Radarsensors, bei dem eine Justierung des Gehäuses (3a,3b) zur Veränderung der Abstrahlrichtung des Radarsensors aus der, der Grundplatte der Halterung (2;13) gegenüberliegenden, Gehäusewand durchführbar ist, **dadurch gekennzeichnet, dass**
- das Umlenkgetriebe eine Umlenkung der Drehbewegung der Drehspindel (15,16) nahezu im rechten Winkel bewirkt, so dass die Drehung der Drehspindel (15,16) nahezu senkrecht zur Abstrahlrichtung erfolgt.

3. Halterung nach Auspruch 1 oder 2, **dadurch gekennzeichnet, dass**
- das Schraubgewinde sich in der Grundplatte, vorzugsweise in Kunstoffeinsätzen (14), der Halterung (13) befindet.

4. Halterung nach einem der vorhergehenden Ansprüche, **dadurch gekennzeichnet, dass**
- das Umlenkgetriebe aus einem Schneckenrad und einem Stirnrad besteht

5. Halterung nach einem der vorhergehenden Ansprüche, **dadurch gekennzeichnet, dass**
- das Schraubgewinde aus einem beim Eindrehen der mindestens einen Justierschraube (11,12) selbstfurchenden Gewinde gebildet ist.

6. Halterung nach einem der vorhergehenden Ansprüche, **dadurch gekennzeichnet, dass**
- das Gehäuse mit drei Schrauben (11,12) an der Halterung (13) befestigbar ist, wobei zwei diagonal gegenüberliegende Schrauben jeweils als Justierschraube (11,12) ausgeführt sind.

## Claims

1. Mounting for an adjustable housing, in which the position of the housing (3a, 3b) on the mounting (2, 13) can be changed by means of at least one adjusting screw (10, 11, 12), and the adjusting screw (10, 11, 12) is guided perpendicular to a baseplate of the mounting (2, 13) via a screw thread through the housing (3a, 3b) or on the housing (3a, 3b), **characterized in that** the at least one adjusting screw (11, 12) is provided on the mounting (13) with a deflection mechanism via which a rotary spindle (15, 16) on the baseplate of the mounting (13) can be guided outwards, it being possible for the adjustment to be brought about via a rotation of the rotary spindle (15, 16) for the purpose of rotating the at least one adjusting screw (11, 12) in the screw thread, and the deflection mechanism comprising bevel wheels (17, 18, 19, 20) and at least one bevel wheel (18, 20) being moveable on the adjusting screw (11, 12) and being able to be pressed against the other bevel wheel in each case via a spring (21) or a suitable shape of the bevel-wheel holder.

2. Mounting according to Claim 1,
- for the fastening of the housing (3a, 3b) of a radar sensor, in which an adjustment of the housing (3a, 3b) for the purpose of changing the beam direction of the radar sensor can be carried out from the housing wall lying opposite the baseplate of the mounting (2; 13), **characterized in that**
- the deflection mechanism brings about a deflection of the rotational movement of the rotary spindle (15, 16) virtually at right angles, so that the rotary spindle (15, 16) is rotated virtually perpendicular to the beam direction.

3. Mounting according to Claim 1 or 2, **characterized in that**
- the screw thread is situated in the baseplate, preferably in plastic inserts (14), of the mounting (13) .

4. Mounting according to one of the preceding claims, **characterized in that**
- the deflection mechanism comprises a worm wheel and a spur wheel.

5. Mounting according to one of the preceding claims, **characterized in that**
- the screw thread is formed from a thread which is self-tapping when the at least one adjusting screw (11, 12) is screwed in.

6. Mounting according to one of the preceding claims, **characterized in that**
- the housing can be fastened by means of three screws (11, 12) on the mounting (13), two diagonally opposite screws being designed in each case as adjusting screws (11, 12).

## Revendications

1. Support pour un boîtier ajustable, dans lequel la position du boîtier (3a, 3b) au support (2, 13) peut être modifiée à l'aide d'au moins une vis d'ajustage (10, 11, 12) et les vis d'ajustage (10, 11, 12) sont amenées par un filetage à travers le boîtier (3a, 3b) ou sur le boîtier (3a, 3b) perpendiculairement par rapport à une plaque de base du support (2, 13),
**caractérisé en ce que**
l'au moins unique vis d'ajustage ( 11, 12) est prévue sur le support (13) avec un renvoi d'angle à engrenage, permettant d'amener une broche de tournage ( 15, 16) sur la plaque de base (13) vers l'extérieur, l'ajustage se faisant par une rotation de la broche de tournage (15, 16) pour tourner au moins une vis d'ajustage (11, 12) dans le filetage, le renvoi d'angle se composant de pignons coniques (17, 18, 19, 20), avec au moins un pignon conique (18, 20) mobile sur la vis d'ajustage ( 11, 12) et en pression sur l'autre pignon conique correspondant au moyen d'un ressort (21) ou d'une forme appropriée du logement des pignons.

2. Support selon la revendication 1
- pour la fixation du boîtier (3a, 3b) d'un capteur de radar, dont un ajustage du boîtier (3a, 3b) pour la modification de la direction du faisceau du capteur de radar se fait par la paroi de boîtier opposée à la plaque de base du support (2, 13),
**caractérisé en ce que**
- le renvoi d'angle réalise une déviation du mouvement de rotation des broches de tournage (15, 16) approximativement à angle droit, de sorte que la rotation des broches de tournage (15, 16) se fait approximativement perpendiculairement à la direction du faisceau.

3. Support selon la revendication 1 ou 2,
**caractérisé en ce que**
le filetage se trouve sur la plaque de base, de préférence dans des inserts en matériau synthétique ( 14) du support ( 13).

4. Support selon l'une des revendications précédentes,
**caractérisé en ce que**
le renvoi d'angle se compose d'une roue à denture hélicoïdale et d'une roue frontale.

5. Support selon l'une des revendications précédentes,
**caractérisé en ce que**
le filetage est formé par un autotaraudage en vissant au moins une vis d'ajustage (11, 12).

6. Support selon l'une des revendications précédentes,
**caractérisé en ce que**
le boîtier est fixé au moyen de trois vis ( 11, 12) sur le support (13) avec deux vis diagonalement opposées réalisées sous la forme de vis d'ajustage.
